Europäisches Patentamt

European Patent Office

Office européen des brevets

(11) Publication number: **0 053 879**
**B1**

## EUROPEAN PATENT SPECIFICATION

(45) Date of publication of patent specification: **26.03.86**

(51) Int. Cl.⁴: **B 01 D 39/14**

(21) Application number: **81305357.6**

(22) Date of filing: **11.11.81**

(54) Filter elements and processes for the production thereof.

(30) Priority: **12.11.80 JP 159959/80**

(43) Date of publication of application:
**16.06.82 Bulletin 82/24**

(45) Publication of the grant of the patent:
**26.03.86 Bulletin 86/13**

(84) Designated Contracting States:
**DE FR GB**

(56) References cited:
**BE-A- 542 362**
**GB-A-2 015 604**
**US-A-3 073 735**

**SCHWEIZERISCHE TECHNISCHE ZEITSCHRIFT,
vol. 66, no. 33, 14th August 1969, pages
665-680, Wabern, CH., H. STÄGER: "Staub-,
Rauch-, Luftbehandlung"**

(73) Proprietor: **Toyo Boseki Kabushiki Kaisha
No 8, Dojimahamadouri 2-chome Kita-ku
Osaka-shi, Osaka-fu (JP)**

(73) Proprietor: **NIPPONDENSO CO., LTD.
1, 1-chome, Showa-cho
Kariya-shi Aichi-ken (JP)**

(72) Inventor: **Tani, Yatsuhiro
No. 21, Mibunaginomiya-cho Nakagyo-ku
Kyoto-shi Kyoto-fu (JP)**
Inventor: **Ohmori, Susumu
No. 168-7, Sakamotohommachi
Otsu-shi Shiga-ken (JP)**
Inventor: **Komagata, Hideki
No. 1300-1, Honkatata-cho
Otsu-shi Shiga-ken (JP)**

(74) Representative: **Rackham, Stephen Neil et al
GILL JENNINGS & EVERY 53-64 Chancery Lane
London WC2A 1HN (GB)**

# 0 053 879

**Description**

The present invention relates to processes for the production of filter elements which are useful for removing particles from fluids with high collection efficiency and little clogging.

There have hitherto been known some laminated filters, for removing dusts from fluids, which are produced by laminating two or more non-woven fabrics having different kinds of fibre materials, different fibre deniers, different fibre densities and different thickness, so that a non-woven fabric having low fibre density lies at the side for inflow of fluid and a non-woven fabric having high fibre density lies at the side for outflow of fluid.

These laminated filters are produced by various processes, for example, by piling up various non-woven fabrics, or by piling up a plurality of webs of different fibres followed by treating with a resin, and are usually used as a filter for gases such as an air filter for air-conditioners, an air filter for automobiles, or as a filter for liquids such as a fuel or oil filter for automobiles and aircraft. The laminated filters are superior to a filter having a single non-woven fabric layer, in less clogging and higher dust-holding capacity, but still have a drawback in small dust-holding capacity in relation to the volume thereof. That is, clogging tends to occur even when the laminated filters have a relatively large volume which is not being utilised, and the fluid permeation resistance increases rapidly, resulting in the end of the life of the filter. Accordingly, the known laminated filters are not necessarily satisfactory in view of inferior space utilisation.

The above drawback of the laminated filters may be due to easy formation of dust cake at the side for inflow of fluid, which is unavoidable in the case of laminated filters produced by laminating various non-woven fabrics wherein each non-woven fabric has a uniform fibre density.

There has also hitherto been known from Schweizerische Technische Zeitschrift, Vol. 66, No. 33, 14 August 1969, Pages 665—680, particularly Pages 669—670, a filter material formed from endless glass fibres which are built up, by electronic programme control during manufacture, into wavy mats with increasing density towards the clean air side. The glass fibres are continuously bonded together with plastics and additionally carry an adhesive coating. The result is that the air entry side presents a loose structure, or open texture, which becomes progressively denser and denser towards the clean air side, and thus makes possible a particularly good graduated distribution of the solid particles of dirt towards the clean air side.

As a result of intensive study by the inventors, it has been found that an excellent filter having high dust collection efficiency with little clogging can be obtained by producing a single-layer filter under specified conditions so that the single layer has a continuous fibre density gradient (from sparse phase to dense phase) between the side for inflow of fluid and the side for outflow of fluid.

A process for the production of a filter element, in accordance with the present invention, is characterised by comprising the steps of passing a gas having a powdery binder dispersed and floated therein through fibre webs having a fibre density of $7 \times 10^{-4}$ to $1 \times 10^{-2}$ and being of uniform fibre composition throughout the thickness of the webs, the gas being passed through the webs at a flow rate of not more than 4m/second and in the direction of the thickness of the webs, to adhere the binder to the webs in an amount of 10 to 80% by weight based on the weight of the webs, in a relatively large amount at a surface zone of the webs upstream of the gas flow, in a relatively small amount at a surface zone of the webs downstream of the gas flow and with a continuously decreasing density gradient of the binder from the upstream surface zone to the downstream surface zone of the webs, hot-pressing the binder-containing webs to achieve a fibre density of not higher than 0.2 and to cause the binder to become molten, and then releasing from the hot-pressing to allow the thickness of the webs to recover from that during the step of hot-pressing and present a continuously increasing fibre density from the intended inflow side to the intended outflow side of the filter element.

By uniform fibre composition is meant that the fibre material is uniform, except as regards density, at any position in the direction of the thickness of the filter. For example, when the webs forming the filter consist of two kinds of fibre, a fibre of 1 denier and a fibre of 3 denier, both fibres are uniformly mixed at any position in the direction of the thickness.

The single-layer filter produced by the process of the present invention may be used alone, or two or more of the single-layer filters may be used together in the form of a multiple filter, or further after laminating with a conventional non-woven fabric as explained hereinafter.

The present invention is illustrated in more detail with reference to the accompanying drawings, in which:

Figure 1, A shows the variation of fibre density in the direction of thickness of a known laminated filter, e.g. three-layer laminated filter. Figure 1, B shows the variation of fibre density in the direction of thickness of a filter made by the process of the present invention.

Figure 2, A and B are schematic sectional views showing, respectively, the state of collected dusts in a known three-layer laminated filter and a filter made by the process of the present invention.

Figure 3 shows a flow of steps for producing a filter by one embodiment of the process of the present invention.

Figure 4 shows the variation of fibre density in the direction of thickness in known laminated filters and a filter made by the process of the present invention.

Figure 5 shows a flow of steps in another embodiment of the process of the present invention.

2

For convenience, the following description will refer to the filters of the present invention rather than to the filters made by the process of the present invention.

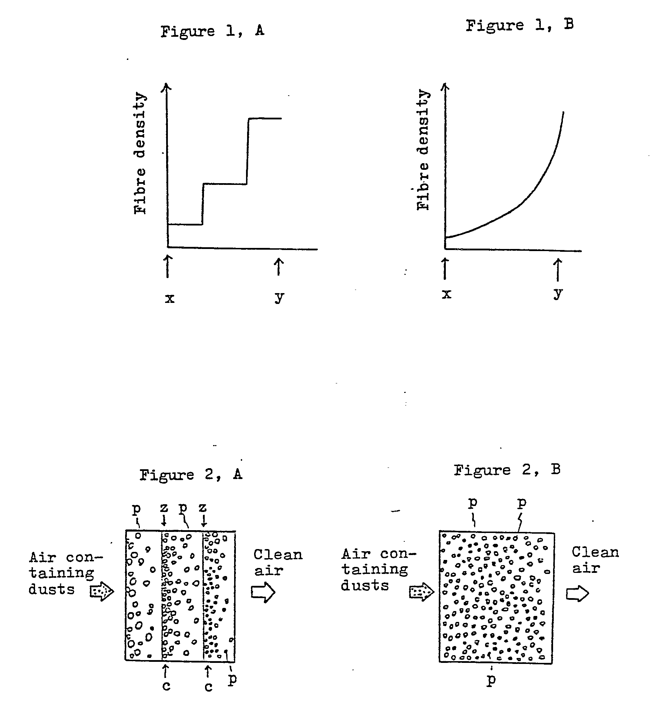

Referring to Figure 1, A, in the known three-layer laminated filter, the fibre density increases stepwise from the side for inflow of fluid (x) to the side for outflow of fluid (y), but on the other hand, referring to Figure 1, B, in the single-layer filter of the present invention, the fibre density increases continuously from the side for inflow of fluid (x) to the side for outflow of fluid (y).

The filter of the present invention has a fibre density of 0.01 to 0.1 at the side for inflow of fluid and a fibre density of 0.05 to less than 0.2 at the side for outflow of fluid, and has preferably a small fibre density gradient at the side for inflow (x) and a large fibre density gradient at the side for outflow (y).

The fibre density of filters of the present invention may be controlled so as to suit the kinds and particle destribution of dusts contained in the fluid to be treated, but the fibre density gradient is preferably approximately shown by an exponential curve, i.e. a curve of the following equation.

$$\alpha = \alpha_i \cdot \exp. \left( \frac{a}{\sqrt[3]{\alpha_i}} \times \frac{l}{lo} \right)$$

wherein
$\alpha$ = fibre density at a distance: l,
$\alpha_i$ = fibre density at the side for inflow of fluid,
a = a constant within the range 0.35—0.64,
lo = thickness of the filter, and
l = distance from the side for inflow of fluid,
measured in the direction of thickness.

In contrast, if the fibre density gradient at the side of inflow of fluid is larger, the filter shows a lower dust-holding capacity, and when the fibre density gradient at the side of outflow of fluid is smaller, the filter shows inferior dust collection efficiency. The fibre density in the present invention denotes a ratio ($cm^3/cm^3$) of a total volume of the fibres contained in the filter to a total volume of space in the filter.

The fibres used in the filters of the present invention include regular yarns having round section, and also special yarns having various other sections such as Y-shape section, X-shape section, C-shape section. Examples of the fibres are natural fibres such as cotton fibre, hempen fibre, wool fibre, or asbestos fibre, semi-synthetic fibres such as rayon fibre, viscose fibre or cellulose acetate fibre, synthetic fibres such as polyamide fibre (e.g. nylon fibre), polyester fibre, polyolefin fibre, polyvinylidene fluoride fibre, or sheath-core mixed type fibres therefrom, inorganic fibres such as glass fibre, rock wool fibre, slag wool fibre, or metallic fibre. The denier of the fibres is not critical but is usually in the range of 0.001 to 15, preferably 0.001 to 5. These fibres may be used alone or in combination of two or more kinds thereof. When two or more fibres are used together, they are uniformly mixed, because the filters of the present invention must have uniform composition of the fibre material at any position.

The filters of the present invention consisting of a single layer may be used alone for removing particles from fluids with a high collection efficiency and little clogging, but two or more of the single-layer filters may be used as a multiple filter by laminating them. Moreover, the single-layer filter or multiple filter may also be laminated with a conventional non-woven fabric in order to give them higher degree of precision in the dust-holding capacity.

Since the filters of the present invention have a fibre density gradient, they display a remarkably large space utilisation for collecting dusts and hence have a great dust-holding capacity. Referring to Figure 2, A, in the use of the known three-layer laminated filter, the dust particles (p) are collected predominantly at the side of inflow of fluid (z) in each layer, to form a dust cake (c), which results in significant increase of permeation resistance and finally finishes its life. Figure 2, A shows schematically the state of collected dusts in the known laminated filter just before the life is finished. On the contrary as is shown in Figure 2, B, in the use of the filters of the present invention, even when the same amounts of dusts are collected, the dust particles (p) are uniformly collected, in the direction of thickness, and do not form any dust cake, because the present filters have a continuous fibre density gradient and hence the dust collection efficiency varies continuously from low efficiency to high efficiency between the side of inflow of fluid to the side of outflow of fluid.

Because of the excellent dust-holding capacity, the filters of the present invention are particularly useful as an air filter for air conditioners or an air filter for automobiles, but are also useful for other various uses in place of the conventional laminated filters.

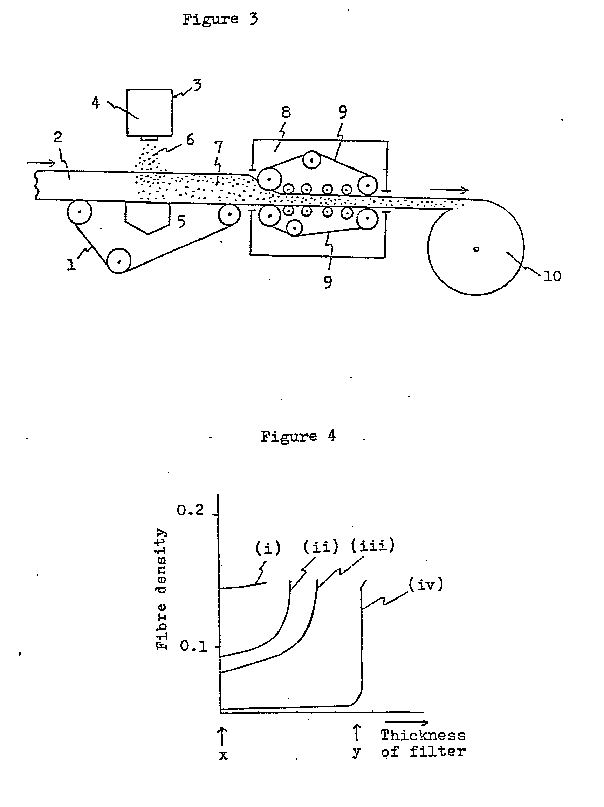

An embodiment of the process of the present invention is shown in Figure 3.

On a screen conveyor (1), webs of fibre (2) are put, and thereon a binder (4) is sprayed from a binder dispersing machine (3). The binder-containing gas (6) is sucked in by a suction box (5), and by this means the binder is caused to penetrate into the webs. The binder-containing webs (7) then run into an electric furnace (8), wherein the webs are hot-pressed with a pair of belts (9). The filter thus formed is then allowed to recover from the hot pressing, and is wound onto a wind-up roll (10).

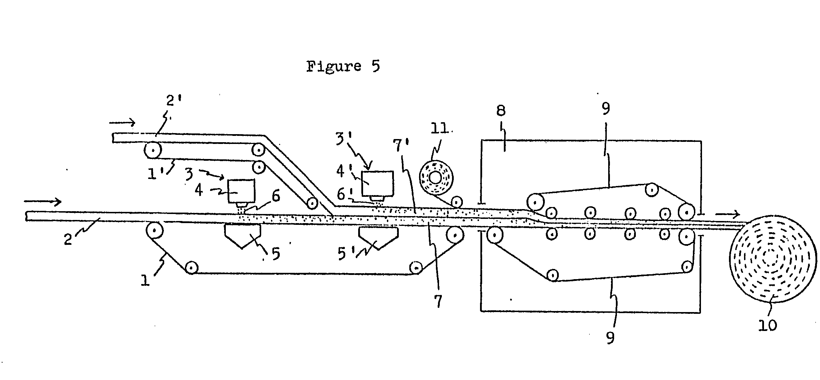

Another embodiment of the process is shown in Figure 5. According to this embodiment, a three-layer filter consisting of two kinds of webs and a non-woven fabric is produced. Firstly, webs (2) are put on a belt conveyor (1), and a binder is sprayed on and penetrates as in Figure 3. Onto the binder-containing webs (7), further webs (2') carried on a belt conveyor (1') are piled up and a binder (4') is sprayed on from a binder dispersing machine (3'), and the gas (6') is sucked in by a suction box (5') to form a binder-containing webs layer (7'). Thereafter, a non-woven fabric (11) is piled up onto the layer (7'), and the thus formed three-layer sheet is run into an electric furnace (8) and treated in the same manner as in Figure 3.

In the process of the present invention, the binder is carried into and dispersed within the webs by passing a binder-containing gas (e.g. air) through the webs at a flow rate of not higher than 4 m/second. The result is that the amount of binder adhering to unit amount of fibre decreases progressively, i.e. there is a gradient of this amount in the direction of the thickness. This dispersion of binder within the webs can be carried out by spraying a binder with a spray gun, e.g. a spray gun for electrostatic powder coating, onto the surface of the webs and simultaneously sucking the binder-containing gas with a suction box as is shown in Figure 3 and Figure 5. Alternatively, this dispersion may be carried out by dispersing and floating a quantitative amount of a binder in a fixed width with a rotary screen or a gravure roll.

The webs used in the process have a fibre density of $7 \times 10^{-4}$ to $1 \times 10^{-2}$. The webs having a comparatively small fibre density may be obtained by giving fibres crimp spontaneously or mechanically, and the webs having a comparatively large fibre density may be obtained by compressing such webs or from non-crimped webs. In contrast, if the webs have a fibre density smaller than $7 \times 10^{-4}$, the binder can hardly be adhered onto the webs because the binder passes through the webs without being adhered, and hence, the desired adhesion amount gradient can hardly be obtained. On the other hand, when the fibre density is larger than $1 \times 10^{-2}$, the binder deposits predominantly on the upper surface at which the gas enters the webs.

When the binder-containing gas (e.g. air), i.e. gas wherein the binder is dispersed and floated, is passed through the webs at a flow rate of not higher than 4 m/second, the binder contained in the gas is adhered onto the webs in such an adhered amount distribution that the adhered amount of binder becomes larger at the upper surface of the layer of webs and is rapidly decreased with distance from the surface to the lower side of the layer. In contrast, if the flow rate of the binder-containing gas is larger than the above rate, 4 m/second, the binder adhered onto the webs is easily scattered from the webs, and hence, it is difficult to control the adhesion amount of binder.

In the process, the binder-containing webs are hot-pressed in the electric furnace. In this step, the webs have a fibre density of not higher than 0.2, but not lower than the fibre density of the starting webs. When the webs are hot-pressed, the binder contained therein is molten and then effects bonding of adjacent fibres in the webs. The number of bonding points varies with the adhered amount of binder in the webs. That is, when the adhered amount of binder is high, the number of bonding points is large, and when the adhered amount of binder is low, the number of bonding points is small. After passing the step of hot-pressing, the layer of webs is released from pressing, and thereby the thickness of the layer recovers somewhat from that during the step of hot-pressing in the electric furnace. The elastic recovery of the webs is smaller when the adhered amount of binder is high, and is larger when the adhered amount of binder is low. It is this behaviour which imparts the continuous fibre density gradient to the filter.

In contrast, if the fibre density of the webs in the hot-pressing step is larger than 0.2, the bonding of fibres is effected not only between the adjacent fibres but also between fibres in the surrounding area. This causes the elastic recovery of the layer of webs to become smaller, even after release from pressing, and hence the desired fibre density gradient is hardly obtained.

When two or more webs are piled up and the binder is adhered with an adhered amount gradient in each of the webs, or when a non-woven fabric is further piled up thereon, followed by hot-pressing as in the process shown in Figure 5, there can be obtained a multiple filter having a higher degree of precision in the dust-holding capacity.

Materials which can be used as binder include thermosetting resins such as phenol resins, melamine resins, epoxy resins, urea resins, alkyd resins, unsaturated polyester resins, silicone resins, urethane resins, and diallyl phthalate resins; and thermoplastic resins such as polyamides, polyesters, polyethylene, polypropylene, polyvinyl chloride, polyvinyl acetate, polyvinyl alcohol, polyvinylidene chloride, and polytetrafluoroethylene which may be in the form of a powder or a liquid. When a powdery binder is used, it has a particle size of 1 to 150 µm, preferably 10 to 100 µm. When the fibres have a denier towards the smaller limit of the preferred range, the binder has preferably a particule size towards the smaller limit of their preferred range. Besides, the particle distribution of binder may be a polydisperse distribution or a monodisperse distribution. The powdery binder may be in a particle shape or alternatively may be a powdery fibre.

The binder is adhered onto the webs in an amount of 10 to 80% by weight based on the total weight of the webs. In contrast, if the amount of binder adhered is over 80% by weight, the elastic recovery of the layer of webs becomes smaller when released from pressing in the hot-pressing steps, and hence the fibre density gradient is hardly obtainable, or the space for collecting dusts becomes smaller, which results disadvantageously in lowering of the dust-holding capacity. On the other hand, if the amount of binder adhered is smaller than 10% by weight, the number of bonding points between fibres decreases and the filter obtained shows inferior dimensional stability, and hence, the desired filter cannot be obtained.

The present invention is illustrated by the following Examples but is not limited thereto.

### Example 1

A filter was produced by the process as shown in Figure 3.

Webs (2) consisting of a polyester fibre of 3 denier (fibre weight per square meter: 400 g/m², fibre density: $2 \times 10^{-3}$) were put on a screen conveyor (1) which ran at a rate of 1 m/minute. Onto the webs, a powdery binder (4) of a coloured copolyester was sprayed at a rate of 60 g/m² from a binder dispersing machine (3) by means of a spray gun for powder coating, and simultaneously, the binder-containing air (6) was sucked at a rate of 1.0 m/second through the webs (2) and the screen conveyor (1) by mens of a suction box (5) which was provided under the screen conveyor (1). The webs (7) containing binder then ran into an electric furnace (8) at 130°C, wherein the webs were hot-pressed to a thickness of 3 mm by a pair of belts (9) which were coated with a polytetrafluoroethylene. After releasing from pressing, at which stage the elastic recovery was measured, the hot-pressed webs were wound up onto a wind-up roll (10) to give a filter having a thickness of 5 mm, an upper surface fibre density of 0.11, a lower side fibre density of 0.03, and a continuous fibre density gradient. It was observed by a reflective microscope that the coloured binder was present in large amounts in the upper surface zone of the filter and the adhered amount thereof gradually decreased with the distance from the upper surface to the lower side, i.e. there was an adhered amount gradient.

The filter thus obtained was subjected to the following test.

The filter was mounted in a dusting tester (friction area: 79 cm²), and was supplied with air containing No. 8 testing dust, as defined in JIS (Japanese Industrial Standard) at a flow rate of 30 cm/second. There were measured: the initial collection efficiency at the stage of permeation resistance increase of 0.98 mbar (10 mm $H_2O$), and an average collection efficiency and a dust-holding amount at the stage of permeation resistance increase of 19.6 mbar (200 mm $H_2O$). The results are shown in Table 1.

TABLE 1

| Increase of permeation resistance | | Collection efficiency (%) | Dust-holding amount (g/m²) |
|---|---|---|---|
| (mm $H_2O$) | mbar | | |
| (10) | 0.98 | 96.3 | — |
| (200) | 19.6 | 99.7 | 2920 |

### Reference Examples 1 and 2

For comparison purpose, a single-layer filter was produced in the same manner as described in Example 1 except that the same powdery binder as used in Example 1 was uniformly dispersed in and adhered to card webs consisting of a polyester fibre of 3 denier (fibre weight per square meter: 400 g/m²) and the hot-pressing of the webs was done in a thickness of 2.5 mm. The single-layer filter thus obtained had a uniform fibre density (Reference Example 1).

Besides, a three-layer laminated filter was produced from a non-woven fabric consisting of a polyester fibre of 6 denier (fibre weight per square meter: 110 g/m², thickness: 2 mm), a non-woven fabric consisting of a polyester fibre of 3 denier (fibre weight per square meter: 120 g/m², thickness: 1 mm), and a non-woven fabric consisting of a rayon fibre of 1.5 denier (fibre weight per square meter: 150 g/m², thickness: 0.5 mm) (Reference Example 2).

The collection efficiency and dust-holding amount of these filters in the reference examples were measured in the same manner as in Example 1. The results are shown in Table 2.

TABLE 2

| Ref. Ex. No. | Increase of permeation resistance | | Collection efficiency (%) | Dust-holding amount (g/m²) |
|---|---|---|---|---|
| | (mm $H_2O$) | mbar | | |
| Ref. Ex. 1 | (10) | 0.98 | 95.1 | — |
| | (200) | 19.6 | 99.5 | 820 |
| Ref. Ex. 2 | (10) | 0.98 | 96.3 | — |
| | (200) | 19.6 | 99.6 | 1360 |

5

As is clear from comparison of the results in Table 1 with those in Table 2, the filter of the present invention (Example 1) was the same as the laminated filter of Reference Example 2 in the collection efficiency, but was about two times the latter in the dust-holding amount. The single-layer filter of Reference Example 1 had a uniform fibre density and hence was inferior to the filter of the present invention both in the collection efficiency and the dust-holding amount.

### Example 2

Onto card webs consisting of a mixture of 60% by weight of a polyester fibre of 1 denier and 40% by weight of a polyester fibre (triangle shape section) of 3 denier (fibre weight per square meter: 140 g/m$^2$, having uniformity of mixture in the direction of thickness), air containing the same powdery binder as used in Example 1 was passed at a flow rate of 0.3 m/second, and thereby the powdery binder was adhered to the polyester fibres in the webs. The binder was adhered in a large amount in the upper surface zone, and the adhered amount decreased with the distance from the upper surface to the lower side of the webs.

The resulting webs were hot-pressed at 140°C to a gauge thickness of 1 mm for 2 minutes. After releasing from pressing, the elastic recovery was measured. There was obtained a single-layer filter of a thickness of 1.2 mm, which has a fibre density at the side for inflow of 0.02 and a fibre density at the side for outflow of 0.09 and a continuous fibre density gradient.

The collection efficiency and dust-holding amount of the filter was measured in the same manner as in Example 1. The results are shown in Table 3 (below).

### Reference Example 3

For comparison a filter was produced in the same manner as described in Example 2 except that there were used webs having uneven fibre distribution, which consisted of 100% by weight of the polyester fibre of 1 denier at the upper surface of the webs with the content of the polyester fibre having triangle shape section of 3 denier increasing in a straight line from the surface to the lower side of the webs, and becoming 100% by weight of the polyester fibre having triangle shape section of 3 denier at the lower side of the webs (fibre weight per square meter: 140 g/m$^2$), The properties of the filter were measured as in Example 2, and the results are also shown in Table 3.

### TABLE 3

| Ex. No. | Increase of permeation resistance (mm H$_2$O) | mbar | Collection efficiency (%) | Dust-holding amount (g/m$^2$) |
|---|---|---|---|---|
| Ex. 2 | (10) | 0.98 | 98.0 | — |
| | (200) | 19.6 | 99.7 | 490 |
| Ref. Ex. 3 | (10) | 0.98 | 98.2 | — |
| | (200) | 19.6 | 99.7 | 260 |

### Reference Examples 4 to 7

Four different kinds of filters having different fibre densities between the sides for inflow and outflow of fluid with continuous fibre density gradient as shown in Table 4 were produced by using the same cord webs as used in Example 2 in the same manner as described in Example 2, except that the conditions of hot-pressing temperature and gauge thickness were varied. The properties of these filters were measured likewise. The results are shown in Table 4.

TABLE 4

| Ex. No. | Increase of permeation resistance (mm H₂O)     mbar | | Collection efficiency (%) | Dust-holding amount (g/m²) | Fibre density at the side of inflow | Fibre density at the side of outflow |
|---|---|---|---|---|---|---|
| Ref. Ex. 4 | (10) | 0.98 | 98.8 | — | 0.08 | 0.50 |
| | (200) | 19.6 | — | 65 | | |
| Ref. Ex. 5 | (10) | 0.98 | 98.2 | — | 0.007 | 0.16 |
| | 200) | 19.6 | — | 220 | | |
| Ref. Ex. 6 | (10) | 0.98 | 98.5 | — | 0.15 | 0.20 |
| | (200) | 19.6 | — | 70 | | |
| Ref. Ex. 7 | (10) | 0.98 | 95.1 | — | 0.01 | 0.04 |
| | (200) | 19.6 | — | 380 | | |

Examples 3 and 4

Card webs consisting of a polyester fibre of 5 denier were held between two screens of 50 mesh and pressed so as to be at a fibre density in one case of $1 \times 10^{-3}$ and in another case of $4 \times 10^{-3}$. On these webs a powdery binder of a phenol resin was sprayed from a powdery binder dispersing machine provided above the webs, and the binder-containing air was drawn into the webs at a flow rate of 1.5 m/second by a suction box provided under the webs, whereby the binder was adhered to the fibres so as to be in larger amounts at the side for inflow of fluid and to be in small amounts at the side for outflow. The binder-containing webs were hot-pressed at 130°C with a pressing machine so as to obtain a fibre density of 0.15 in each case.

The filters were subjected to the dusting test by using No. 2 testing dust (silica sand powder, defined in JIS) under the conditions of: filtration area: 79 cm²; flow rate of test fluid: 1.2 m/second; a dust concentration in the fluid: 1 g/m³. The initial collection efficiency at the stage of permeation resistance increase of 0.98 mbar (10 mm H₂O) and the dust-holding amount at the stage of permeation resistance increase of 19.6 mbar 200 mm H₂O) were measured. The results are shown in Table 5 (below).

Reference Examples 8 and 9

For comparison, the same webs are used in Examples 3 and 4 were held between two screens of 50 mesh and pressed so as to be at a fibre density of $5 \times 10^{-4}$ and of $1.5 \times 10^{-2}$. The webs were treated in the same manner as described in Examples 3 and 4, and the properties of the filters thus obtained were measured likewise. The results are also shown in Table 5.

# 0 053 879

TABLE 5

| Ex. No. | Fibre density of the webs (cm³/cm³) | Adhesion amount of binder (g/m²) | Thickness of filter (mm) | Performance | |
|---|---|---|---|---|---|
| | | | | Initial collection efficiency (%) | dust-holding amount (g/m²) |
| Ref. Ex. 8 | 0.0005 | 37 | 1.2 | 99.3 | 800 |
| Ex. 3 | 0.001 | 42 | 1.8 | 99.9 | 2900 |
| Ex. 4 | 0.004 | 40 | 2.5 | 98.2 | 3200 |
| Ref. Ex. 9 | 0.015 | 43 | 3.7 | 71.2 | 3100 |

As is clear from the above results, the filters of Examples 3 and 4 showed large dust-holding amount with a high initial collection efficiency.

The change of fibre density in the direction of thickness in each filter is shown in Figure 4, wherein (i) is the change of fibre density of the filter in Reference Example 8, (ii) is that of the filter in Example 3, (iii) is that of the filter in Example 4, and (iv) is that of the filter in Reference Example 9. In case of Reference Example 8, the fibre density of the webs was small at the spraying of the powdery binder, and the powdery binder was adhered comparatively uniformly in the direction of thickness, and the webs were hot-pressed with keeping the uniform fibre density, and hence, the obtained filter showed inferior dust-holding capacity. In case of Examples 3 and 4, the filters had a small gradient of fibre density at the side of inflow of fluid (x) and a large gradient of fibre density at the side of outflow of fluid (y), and the fibre density gradient was approximately in an exponential curve, and hence, the filters showed excellent dust-holding capacity. In case of Reference Example 9, the fibre density of the webs was large at the spraying of the powdery binder, and hence the powdery binder adhered merely in the upper surface zone of the webs, that is, the portion influencing the initial collection efficiency was merely restricted to the upper surface zone of the filter.

## Example 5

A multiple filter consisting of two webs (2 and 2') and non-woven fabric (11) was produced by the process as shown in Figure 5.

Two kinds of webs (2 and 2') were put on screen conveyors (1 and 1') which ran at a rate of 1.5 m/minute, respectively. To the webs (2 and 2') were adhered powdery binders of a copolyester (4 and 4') under the conditions of: rate of supply of the binder: 10 g/minute and 30 g/minute; and flow rate of air containing the binder, caused by sucking with suction boxes (5 and 5'): 1.0 m/second in each case. The binder-containing webs (7 and 7') were poled up with a non-woven fabric (11), and the laminate was hot-pressed in an electric furnace (8) at 130°C.

The webs (2) used in this Example 5 consisted of a polyester fibre of 6 denier, and had a fibre weight per square meter of 400 g/m² and a fibre density of $2.3 \times 10^{-3}$. The webs (2') consisted of a polyester fibre of 2 denier, and had a fibre weight per square meter of 100 g/m² and a fibre density of $3.0 \times 10^{-3}$. The non-woven fabric (11) consisted of a polyester fibre and had a fibre weight per square meter of 50 g/m². The hot-pressing was done at a gauge thickness of 4.5 mm, and the filter thus obtained had a thickness of 6.2 mm.

The filter was mounted in a dusting tester (filtration area: 79 cm²), and was supplied with air containing No. 7 testing dust (as defined in JIS) at a flow rate of 30 cm/second. There were measured: the initial collection efficiency at the stage of permeation resistance increase of 0.98 mbar (10 mm $H_2O$), and an average collection efficiency and a dust-holding amount at the stage of permeation resistance incease of 19.6 mbar ($H_2O$). The results are shown in Table 6.

8

TABLE 6

| Increase of permeation resistance (mm H$_2$O) | mbar | Collection efficiency (%) | Dust-holding amount (g/m$^2$) |
|---|---|---|---|
| (10) | 0.98 | 99.0 | — |
| (200) | 79.6 | 99.9 | 4500 |

Reference Examples 10 to 13

Various filters were produced in the same manner as described in Example 1 except that the adhesion amount of binder and the fibre density at the hot-pressing were varied as shown in Table 7. The properties of the filters were measured likewise. The results are shown in Table 7. As is clear from the results, the filters showed inferior balance in the collection efficiency and the dust-holding amount.

TABLE 7

| Ex. No. | Adhesion amount of binder (% by weight) | Fibre density at hot-pressing | Performance Increase of permeation resistance (mmH$_2$O) | mbar | Collection efficiency (%) | Dust-holding amount (g/m$^2$) | Initial permeation resistance (mmH$_2$O) | mbar |
|---|---|---|---|---|---|---|---|---|
| Ref. Ex. 10 | 100 | 0.12 | (10) | 0.98 | 98.5 | — | (21) | 2.06 |
| | | | (200 | 19.6 | — | 65 | | |
| Ref. Ex. 11 | 150 | .0.30 | (10) | 0.98 | — | — | Extremely large | |
| | | | (200) | 19.6 | — | — | | |
| Ref. Ex. 12 | 40 | 0.30 | (10) | 0.98 | 98.7 | — | (15) | 1.47 |
| | | | (200) | 19.6 | — | 60 | | |
| Ref. Ex. 13 | 5 | 0.13 | (10) | 0.98 | 96.1 | — | (5) | 0.49 |
| | | | (200) | 19.6 | — | 400 | | |

The filter obtained in Reference Example 11 showed almost no air permeation because of film-formation of the binder, and it could not be used as a filter.

Reference Example 14

A filter was produced in the same manner as described in Example 1 except that the flow rate of the binder-containing air was 5 m/second. The filter showed a collection efficiency of 97.9% (at the stage of permeation resistance increase of 0.98 mbar, (10 mm H$_2$O) and a dust-holding amount of 180 g/m$^2$ (at the stage of permeation resistance increase of 19.6 mbar 200 mm H$_2$O), which were not satisfactory.

**Claims**

1. A process for the production of a filter element, charcterised by comprising the steps of passing a gas having a powdery binder dispersed and floated therein (6;6,6') through fibre webs (2;2,2') having a fibre density of $7 \times 10^{-4}$ to $1 \times 10^{-2}$ and being of uniform fibre composition throughout the thickness of the webs, the gas being passed through the webs at a flow rate of not more than 4m/second and in the direction of the thickness of the webs, to adhere the binder (4;4,4') to the webs in an amount of 10 to 80% by weight based on the weight of the webs, in a relatively large amount at a surface zone of the webs upstream of the gas flow, in a relatively small amount at a surface zone of the webs downstream of the gas flow and with a continuously decreasing density gradient of the binder from the upstream surface zone to

9

the downstream surface zone of the webs, hot-pressing the binder-containing webs (7;7,7') to achieve a fibre density of not higher than 0.2 and to cause the binder to become molten, and then releasing from the hot-pressing to allow the thickness of the webs to recover from that during the step of hot-pressing and present a continuously increasing fibre density from the intended inflow side to the intended outflow side of the filter element.

2. A process according to claim 1, characterised in that the binder is adhered to two layers (2,2') of the webs which are laminated together before being subjected to the hot-pressing.

3. A process according to either preceding claim, characterised in that the webs are composed of two kinds of fibre.

## Patentansprüche

1. Verfahren zur Herstellung eines Filterelements, gekennzeichnet durch die Schritte:
Leiten eines Gases mit einem darin dispergierten und fließenden pulverförmigen Bildmittel (6; 6, 6') durch Faserbahnen (2; 2, 2') mit einer Faserdichte von $7 \times 10^{-4}$ bis $1 \times 10^{-2}$ und von einheitlicher Faser-Zusammensetzung über die gesamte Dicke der Bahn, wobei das Gas durch die Bahnen mit einer Strömungsgeschwindigkeit von nicht mehr als 4 m/s und in Richtung der Dicke der Bahnen hindurchgeleitet wird, wodurch das Bindemittel (4; 4, 4') an die Bahnen in einer Menge von 10 bis 80 Gew.-%, bezogen auf das Gewicht der Bahnen, angeheftet wird, und zwar in einer relativ großen Menge an einer Oberflächenzone der Bahnen stromaufwärts des Gastroms, in einer relativ kleinen Menge an einer Oberflächenzone der Bahnen stromabwärts des Gasstroms und mit koninuierlich abnehmendem Dichtegradienten des Bindemittels von der stromaufwärtigen Oberflächenzone zu der stromabwärtigen Oberflächenzone der Bahnen, Heißpressen der Bindemittel enthaltenden Bahnen (7; 7, 7'), um eine Faser-Dichte von nicht mehr als 0,2 zu erzielen und das Bindemittel zum Schmelzen zu bringen und danach Entlassen aus dem Heißpreßvorgang, damit die Dicke der Bahnen sich von derjenigen des Heißpreßschrittes erholen kann und eine kontinuierlich wachsende Faserdichte von der vorgesehenen Zuflußseite zu der vorgesehenen Abflußseite des Filterelements hergestellt wird.

2. Verfahren nach Anspruch 1, dadurch gekennzeichnet, daß das Bindemittel an zwei Schichten (2; 2') der Bahnen angeheftet wird, die zusammenlaminiert werden, bevor sie dem Heißpressen unterworfen werden.

3. Verfahren nach einem der vorhergehenden Ansprüche, dadurch gekennzeichnet, daß die Bahnen aus zwei Arten von Fasern bestehen.

## Revendications

1. Procédé de fabrication d'un élément filtrant, caractérisé en ce qu'il comprend les opérations de circulation d'un gaz dans lequel un liant en poudre est dispersé et est en suspension (6; 6, 6') à travers des nappes (2; 2, 2') de fibres ayant une densité de fibres de $7.10^{-4}$ à $1.10^{-2}$ et ayant une composition uniforme des fibres dans toute l'épaisseur des nappes, le gaz circulant à travers les nappes avec une vitesse ne dépassant pas 4 m/s et dans la direction de l'épaisseur des nappes, de manière que le liant (4; 4, 4') adhère aux nappes en quantités comprises entre 10 et 80% du poids des nappes, en quantités relativement grandes dans une zone superficielle des nappes se trouvant en amont par rapport au courant de gas et en quantités relativement faibles dans une zone superficielle des nappes se trouvant en aval par rapport à la circulation du gaz, et avec un gradient de densité du liant qui diminue de façon continue del al zone superficielle amont à la zone superficielle aval des nappes, de compression à chaud des nappes (7; 7, 7') contenant le liant de manière que la densité des fibres ne dépasse pas 0,2 et que liant fonde, puis de suppression de cette compression à chaud de manière que l'épaisseur des nappes puisse augmenter par rapport à la valeur obtenue pendant la compression à chaud, les nappes ayant une densité de fibres qui croît de façon continue du côté prévu d'entrée au côté prévu de sortie de l'élément filtrant.

2. Procédé selon la revendication 1, caractérisé en ce que le liant est collé à deux couches (2, 2') des nappes qui sont collées l'une à l'autre avant d'être soumises à la compression à chaud.

3. Procédé selon l'une quelconque des revendications précédentes, caractérisé en ce que les nappes sont composées de deux types de fibres.

### Figure 1, A

### Figure 1, B

### Figure 2, A

Air containing dusts ⇨ | Clean air ⇨

### Figure 2, B

Air containing dusts ⇨ | Clean air ⇨

Figure 3

Figure 4

Figure 5